# EUROPEAN PATENT APPLICATION

(11) **EP 2 202 746 A1**
(43) Date of publication of application: **30.06.2010**
(21) Application number: 08836013.6
(22) Date of filing: 30.09.2008
(51) Int. Cl.: G11B 20/12, G11B 7/004, G11B 7/007, G11B 20/10

(54) **INFORMATION RECORDING MEDIUM, RECORDING/REPRODUCING APPARATUS AND INFORMATION RECORDING METHOD**

(30) Priority: 01.10.2007 JP 2007257802
(71) Applicant: Sharp Kabushiki Kaisha, Osaka-shi, Osaka 545-8522 (JP)
(72) Inventor: AKIYAMA, Jun, Osaka-shi, Osaka 545-8522 (JP)
(74) Representative: Müller - Hoffmann & Partner
(86) International application number: PCT/JP2008/067727
(87) International publication number: WO 2009/044725

(57) **Abstract**

An information storage medium (1) of the present invention includes an L0 layer and an L1 layer of a format different from that of the L0, and in a control information area (12) of the L0 layer is stored control information AC0 that defines an operation that a recording/ playback apparatus is allowed to perform with respect to the L0 layer, and in a control information area (13) of the L1 layer is stored control information AC1 that defines an operation that the recording/ playback apparatus is allowed to perform with respect to the L1 layer. The L0 layer is a writable recording layer and includes a control information storage area (14) in which to store the AC1, which is control information of the L1 layer and which is stored in the L1 layer. As such, the present invention provides an information storage medium, a recording/ playback apparatus, a recording/ playback method, each of which allows for speedy and appropriate control at the time of recording and playback.

## Description

### Technical Field

The present invention relates to an information storage medium, a recording/ playback apparatus, and an information recording method. More particularly, the present invention relates to an information storage medium which includes a plurality of recording layers and in which control information is stored, a recording/playback apparatus for the information storage medium, and an information recording method for recording control information of the information storage medium.

### Background Art

In recent year, as digitalization of various types of information, such as image information and audio information, has been advanced, an amount of such digitalized information has increased markedly. To cope with this, techniques for optical discs and optical disc recording/ playback apparatuses that conform to an increase in capacity and density have been studied and developed.

One of the techniques for increasing capacity is an optical disc in which a plurality of recording layers are laminated. An example of such an optical disc may be one disclosed in Patent Literature 1.

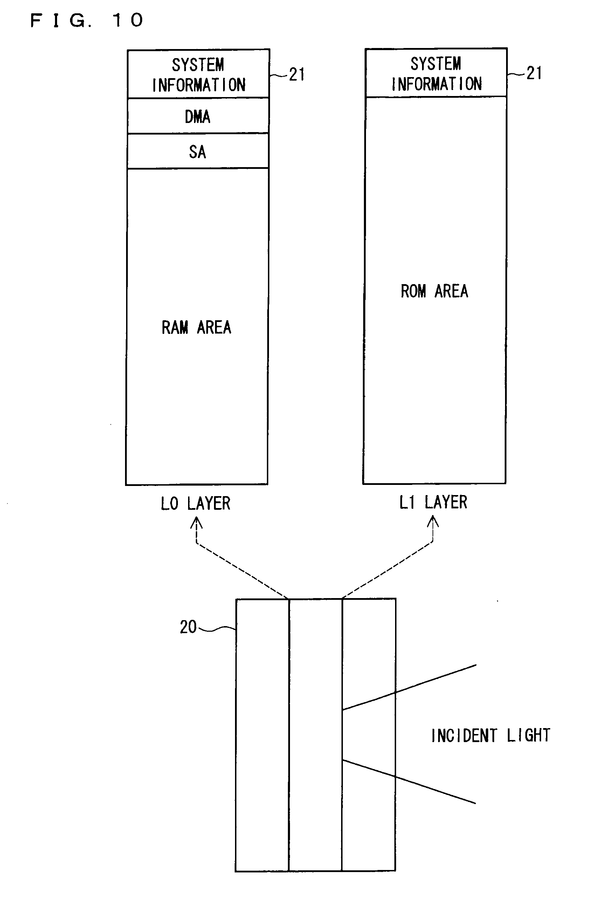

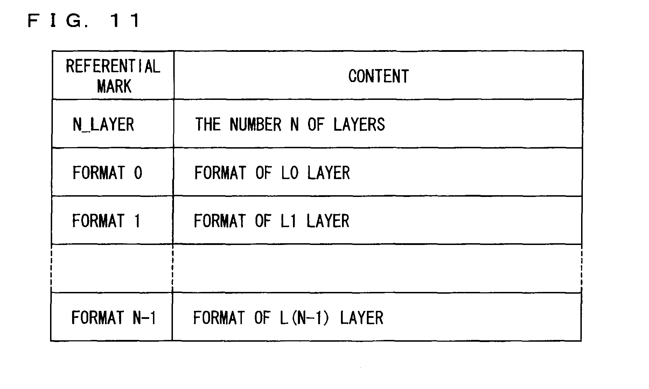

Further, techniques in which an optical disc appropriately controls an operation of an optical disc recording/playback apparatus with respect to the optical disc itself have been also developed. In order that the optical disc controls the operation of the optical disc recording/ playback apparatus appropriately, the optical disc includes various pieces of information related to the optical disc itself. The following describes a conventional technique related to information stored in such an optical disc and an information storage area provided in the optical disc, with reference to Fig. 10 and Fig. 11.

Fig. 10 is a view schematically illustrating an arrangement of an optical disc 20 including a plurality of recording layers, and an arrangement of each of the plurality of recording layers included in the optical disc 20. The optical disc 20 includes two recording layers (L0 layer and L1 layer) having different formats. The L0 layer is a rewritable recording layer and the L1 layer is a read-only layer.

Each of the L0 layer and the L1 layer includes a system information area 21 in which system information is stored. In addition to the system information area 21, the L0 layer includes a DMA (defect management area), an SA (spare area; alternative area), and a RAM (random access memory) area. Further, the L1 layer includes a ROM (read-only memory) area, in addition to the system information area 21.

The system information stored in the system information area 21 is, for example, information on recording conditions and playback conditions of the optical disc 21 and information on respective formats of the L0 layer and the L1 layer.

The SA is an area in which to store information instead of a memory area in case information cannot be recorded in the memory area due to damages or the like defects. That is, the SA is an area in which to store information accordingly when an alternation process is performed.

The DMA is an area in which to store information for defect management, i.e., management information used for the alternation process, by recording an address of a storage area in which information cannot be recorded due to damages or the like defects, and recoding an address of an alternative area.

The L0 layer is a rewritable recording layer, and therefore includes a storage area. If information cannot be recorded in the storage area due to defects or the like, it is necessary to perform the alternation process. On the other hand, the L1 layer is a layer in which new information cannot be recorded, and therefore, does not require the alternation process. On this account, areas, such as the DMA and the SA, which are related to the alternation process, are provided only in the L0 layer, which is a rewritable recording layer.

The RAM area is a storage area in which information can be newly written. On the other hand, the ROM area is an area used for reproducing information that has been already stored. In the ROM area, any information cannot be written additionally.

Fig. 11 is a view illustrating information on a format, as one example of the system information. "N_LAYER" in Fig. 11 indicates the number of layers. In the optical disc 20 in Fig. 10, N_LAYER is 2. "FORMAT 0" indicates format information of the L0 layer. Since the L0 layer is a rewritable recording layer, FORMAT 0 includes information indicating that the layer is rewritable. Further, FORMAT 0 may be information on a version of written standards (book) that define formats, information on recording density, and the like information. In the similar manner, FORMAT 1 to FORMAT N-1 indicate respective pieces of information on formats of respective layers. Since these pieces of information are not necessary to be rewritten, the pieces of information are recorded in a form of read-only pits or wobbles.

Further, Patent Literature 2 discloses a data structure called access control (AC) disc control block as information stored in an optical disc besides the system information. The AC disc control block is used particularly when drives and media may be provided by many different manufactures. The AC disc control block can be used for partitioning a disc into various sections. The AC disc control block defines an access attribute, such as read-only with password or write-once, or other similar access control with respect to each of the sections thus partitioned.

### Citation List

Patent Literature 1
   Japanese Patent Application Publication, Tokukai, No. 2007-26617 (Publication Date: February 1, 2007)
Patent Literature 2
   Japanese Patent Application Publication, Tokukai, No. 2000-322841 (Publication Date: November 24, 2000)

### Summary of Invention

However, it has not been studied so much how such an access control information area (AC disc control block) is arranged in each layer in a case where recording layers are provided for an increase in capacity of an optical disc. Assume that a piece of access control information is stored only in a corresponding layer, for example. In this case, in order that the piece of access control information is read from the corresponding layer, a seeking operation and what is called a jump between layers for moving a position of a light spot are required. As a result, it takes time to read pieces of access control information from the respective recording layers, thereby causing such a problem that it takes time to start up a recording/playback apparatus when a disc is loaded into the recording/ playback apparatus.

The present invention is accomplished in view of the above problem. An object of the present invention is to provide an information storage medium which includes a plurality of recording layers and which is capable of controlling a recording/ playback apparatus promptly and appropriately. Further, another object of the present invention is to provide an information storage medium recording/ playback apparatus for such an information storage medium that is capable of controlling the information storage medium recording/ playback apparatus promptly and appropriately, and an information recording method for recording information in such an information storage medium.

In order to achieve the above object, an information storage medium of the present invention is an information storage medium including a plurality of recording layers, and is **characterized in that** (a) in each of the plurality of recording layers, a corresponding piece of control information that defines an operation that a recording/ playback apparatus is allowed to perform with respect to the each of the plurality of recording layers is stored, and (b) a first recording layer among the plurality of recording layers is writable and includes a control information storage area in which to store a piece of control information that is stored in a second recording layer of a format different from that of the first recording layer.

A piece of control information stored in each of the recording layer defines an operation that a recording/ playback apparatus is allowed to perform with respect to the each of the recording layer. Therefore, it is necessary for the recording/playback apparatus to read, in advance, pieces of control information of the respective recording layers of the information storage medium.

In the above arrangement, in the first recording layer, which is a writable recording layer, is provided a control information storage area in which to store a piece of control information of the second recording layer that is different from the first recording layer. Accordingly, with the arrangement, it is possible to record, layer in the control information storage area, the piece of control information of the second recording. If the piece of control information of the second recording layer is stored in the control information storage area, it is possible to read the piece of control information of the second recoding layer simply by reading the first recording layer. As a result, it is not necessary to move a light spot to the second recording layer in order to read the piece of control information of the second recording layer. This allows for reduction of time necessary for obtaining respective pieces of control information of a plurality of recording layers.

Moreover, in the information storage medium of the present invention, in addition to the above arrangement, it is preferable that the piece of control information that is stored in the second recording layer be information that sets a plurality of areas in the second recording layer and defines respective operations that the recording/ playback apparatus is allowed to perform with respect to the plurality of areas.

With the above arrangement, a recording layer is divided into a plurality of areas so that respective operations that a recording/playback apparatus is allowed to operate can be defined with respect to the plurality of areas. That is, it is possible to define, per area, whether or not the recording/ playback apparatus can perform recording and/or playback with respect to the area. By changing an allowable operation depending on an area as such, the recording/ playback apparatus performs a different operation per area. Further, it is possible to set, per recording layer, to which area the recording/ playback apparatus is allowed to perform an operation and to which area the recording/ playback apparatus is not allowed to perform an operation.

Further, in the information storage medium of the present invention, in addition to the above arrangement, it is preferable that the piece of control information that is stored in the second recording layer includes identification information that identifies a recording/ playback apparatus, and operation information that defines, in association with the identification information, an operation that the recording/playback apparatus is allowed to perform.

In the above arrangement, the information storage medium defines an operation allowed for a recording/playback apparatus to perform with respect to a recording layer, based on the identification information on the recoding/ playback apparatus that is stored in the recording layer. Accordingly, the recording/ playback apparatus performs only the operation that is allowed to perform with respect to the information storage medium. This makes it possible to prevent such a serious problem that the information storage medium, the information stored in the information storage medium, and the recording/playback apparatus are damaged due to incompatibility between the information storage medium and the recording/playback apparatus, that is, due to poor drive compatibility.

In order to achieve the above object, a recording/playback apparatus of the present invention is a recording/ playback apparatus for an information storage medium that includes a plurality of recording layers (a) in each of which plurality of recording layers a corresponding piece of control information that defines an operation that the recording/ playback apparatus is allowed to operate with respect to the each of the plurality of recording layers is stored, and (b) among which plurality of recording layers a first recording layer is writable and includes a control information storage area in which to store a piece of control information that is stored in a second recording layer of a format different from that of the first recording layer, and the recording/ playback apparatus of the present invention is characterized by including: determination means for determining whether or not the piece of control information of the second recording layer is stored in the control information storage area; and recording means for recording, in the control information storage area, the piece of control information of the second recording layer, in a case where the piece of control information of the second recording layer is not stored in the control information storage area.

Further, in order to achieve the above object, an information recording method of the present invention is an information recording method for recoding a piece of control information in an information storage medium that includes a plurality of recording layers (a) in each of which plurality of recording layers a corresponding piece of control information that defines an operation that a recording/ playback apparatus is allowed to operate with respect to the each of the plurality of recording layers is stored, and (b) among which plurality of recording layers a first recording layer is writable and includes a control information storage area in which to store a piece of control information that is stored in a second recording layer of a format different from that of the first recording layer, and the method of the present invention is characterized by including the steps of: (i) determining whether or not the piece of control information of the second recording layer is stored in the control information storage area; and (ii) recording, in the control information storage area, the piece of control information of the second recording layer, in a case where it is determined in the step (i) that the piece of control information of the second recording layer is not stored in the control information storage area.

In the above arrangement and the above method, with respect to an information storage medium which includes a plurality of recording layers in each of which plurality of recording layers a corresponding piece of control information that defines an operation that a recording/playback apparatus is allowed to perform with respect to the each of the plurality of recording layers is stored, it is determined whether or not a piece of control information of a second recording layer, different from a first recording layer that is writable, is stored in a control information storage area of the first recording layer. In a case where the piece of control information of the second recording layer is not stored in the control storage area, it is then recorded in the control information storage area.

As a result, in the first recording layer of the information storage medium is also stored the piece of control information of the second recording layer. If the control information of the second recording layer is stored in the first recording layer, it is possible to obtain the piece of control information of the second recording layer only by reading the first recording layer. That is, after the piece of control information of the second recording layer is recorded in the control information storage area of the first recording layer, it is possible to read the piece of control information of the second recording layer only by reading information stored in the first recording layer. In other words, there is no need to move a light spot to the second recording layer from the first recording layer. Consequently, the above arrangement allows for reduction of time necessary for obtaining respective pieces of control information of a plurality of recording layers.

Additional objects, features, and strengths of the present invention will be made clear by the description below. Further, the advantages of the present invention will be evident from the following explanation in reference to the drawings.

### Brief Description of Drawings

Fig. 1

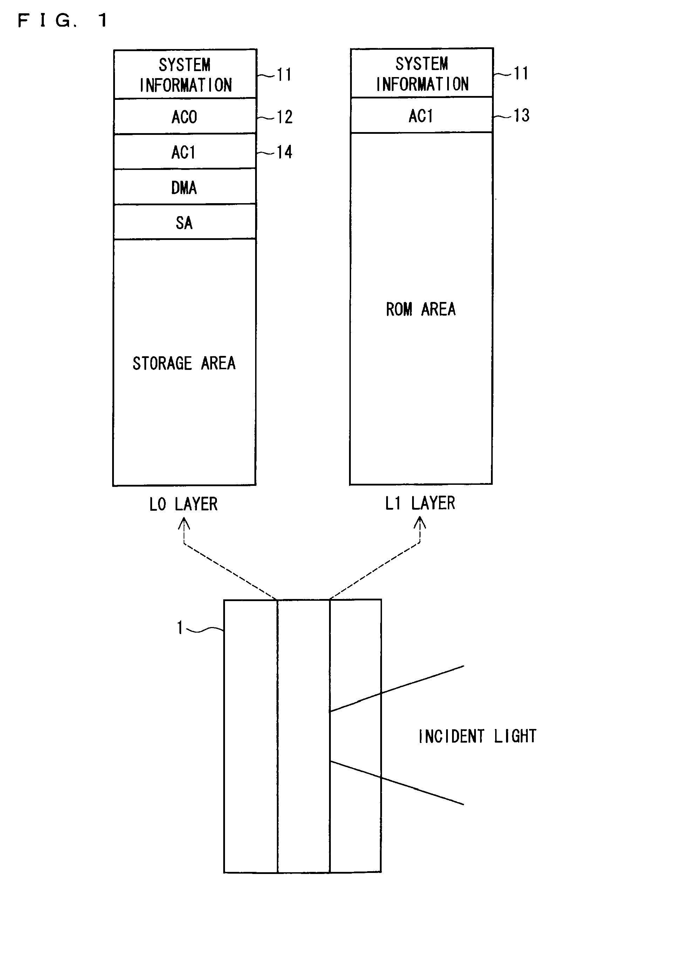

   Fig. 1 is a view schematically illustrating storage areas of information stored in an information storage medium according to one embodiment of the present invention.
Fig. 2

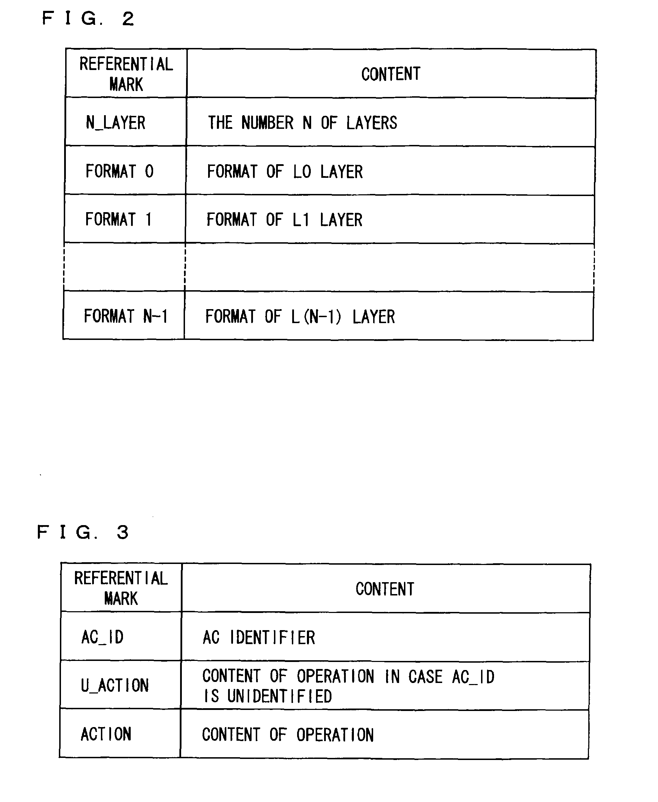

   Fig. 2 is a view schematically illustrating a content of system information stored in the information storage medium.
Fig. 3
   Fig. 3 is a view schematically illustrating a content of access control information stored in the information storage medium.
Fig. 4

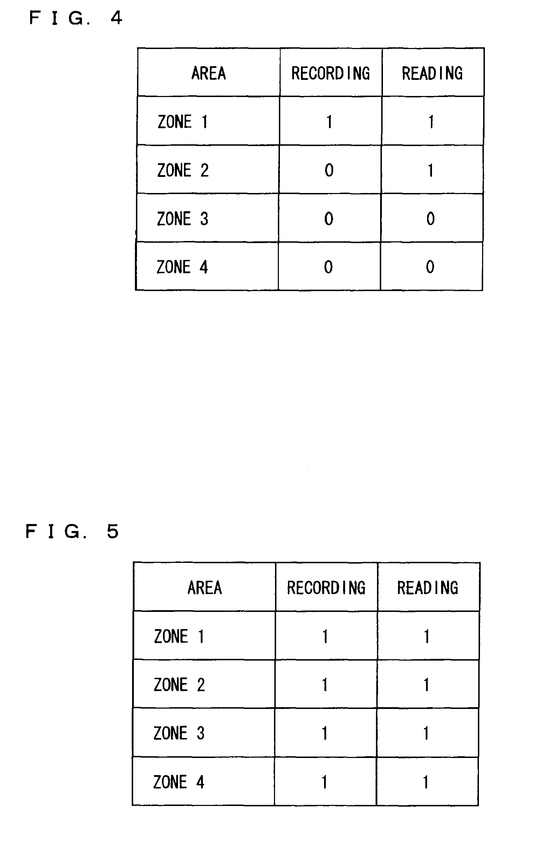

   Fig. 4 is a view schematically illustrating a content of U_ACTION in the access control information, illustrated in Fig. 3, which is stored in the information storage medium.
Fig. 5
   Fig. 5 is a view schematically illustrating a content of ACTION in the access control information, illustrated in Fig. 3, which is stored in the information storage medium.
Fig. 6

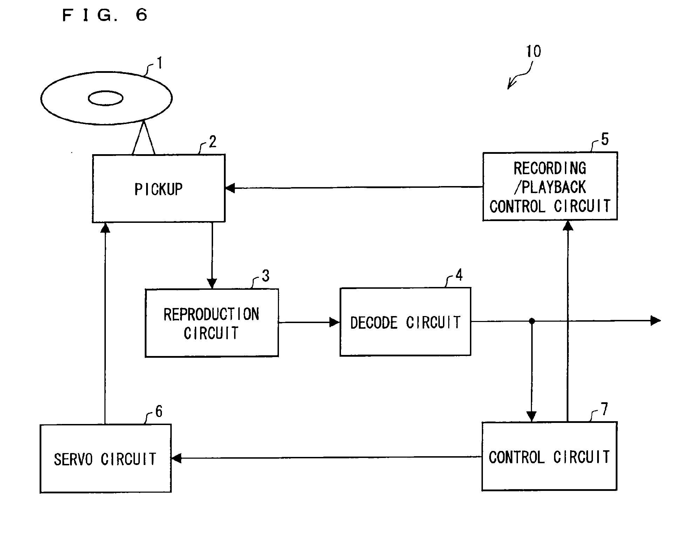

   Fig. 6 is a block diagram schematically showing an arrangement of a recording/ playback apparatus according to one embodiment of the present invention.
Fig. 7

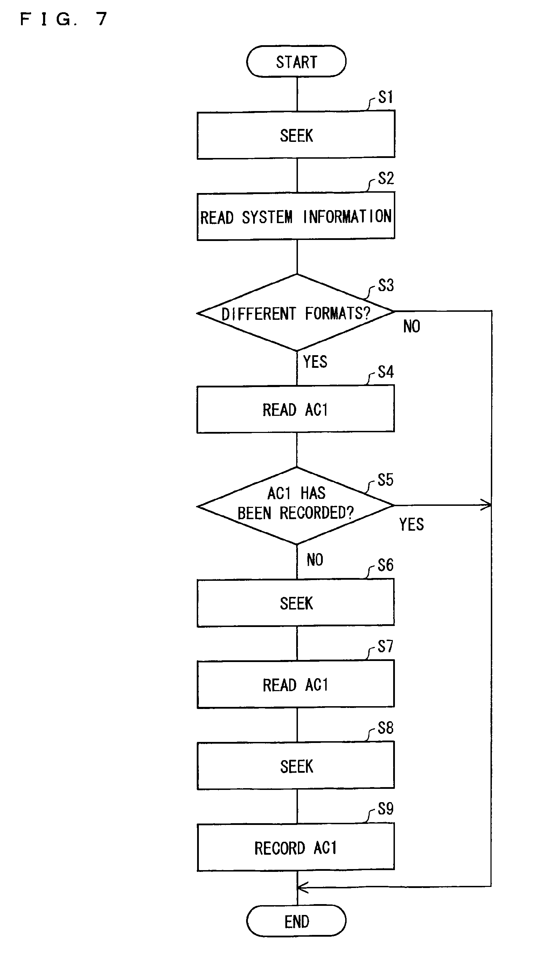

   Fig. 7 is a flowchart showing how the recording/playback apparatus operates.
Fig. 8

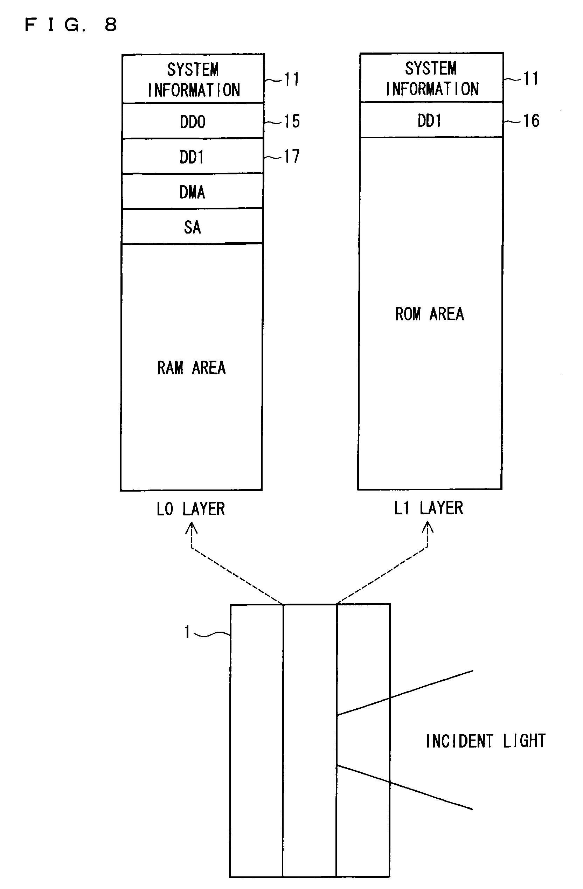

   Fig. 8 is a view schematically illustrating storage areas of information stored in an information storage medium according to another embodiment of the present invention.
Fig. 9

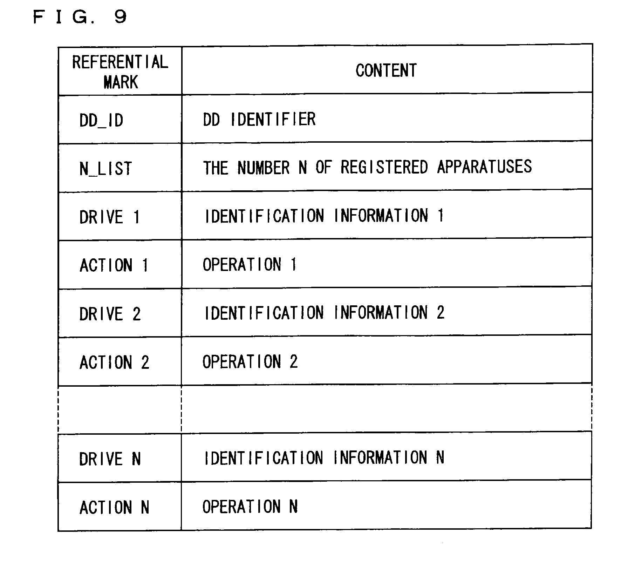

   Fig. 9 is a view schematically illustrating a content of drive compatibility information stored in the information storage medium.
Fig. 10
   Fig. 10 is a view schematically illustrating storage areas of information stored in a conventional information storage medium.
Fig. 11
   Fig. 11 is a view schematically illustrating a content of system information stored in a conventional information storage medium.

### Reference Signs List

- 1: Optical Disc (Information Storage Medium)
- 2: Pickup (Recording Means)
- 3: Reproduction Circuit
- 4: Decode Circuit
- 5: Recording/ playback Control Circuit (Recording Means)
- 6: Servo Circuit
- 7: Control Circuit (Determination Means, Recording Means)
- 10: Optical Disc Recording/ playback Apparatus (Recording/playback Apparatus)
- 11: System Information Area
- 12, 13: Access Control Information Area
- 14: Access Control Information Storage Area (Control Information Storage Area)
- 15, 16: Drive Compatibility Information Area
- 17: Drive Compatibility Information Storage Area (Control Information Storage Area)
- 20: Optical Disc
- 21: System Information Area

### Description of Embodiments

### [Embodiment 1]

One embodiment of an information storage medium according to the present invention is described below with reference to Fig. 1 through Fig. 7. The following deals with an optical disc as an information storage medium. However, the information storage medium of the present invention is not limited to the optical disc.

Initially will be explained various pieces of information to be stored in an optical disc (information storage medium) according to one embodiment of the present invention, with reference to Fig. 1.

Fig. 1 is a view schematically illustrating an arrangement of an optical disc including a plurality of recording layers and an arrangement of each of the plurality of recording layers included in the optical disc. As illustrated in Fig. 1, an optical disc 1 includes 2 recording layers of an L0 layer (a first recording layer) and an L1 layer (a second recording layer) having different formats, which are provided such that the L1 layer and the L0 layer are laminated in this order from a reproduction-laser-light striking side of the optical disc 1. The L0 layer is a writable recording layer and the L1 layer is a read-only recording layer. Examples of the writable recording layer that can be used here may be a write-once layer, a rewritable layer, and a RAM layer. The present embodiment employs the rewritable layer. Further, in the present embodiment, it is assumed that in both of the recording layers, the L0 layer and the L1 layer, recording and reproduction can be performed with the use of the same optical system and laser light wavelength.

The following describes areas provided in each of the recording layers and information to be recorded in the each of the recording layers.

The L0 layer of the optical disc 1 includes a system information area 11, an access control information area 12, an access control information storage area (control information storage area) 14, a DMA, an SA, and a storage area. The L1 layer includes a system information area 11, an access control information area 13, and a ROM area.

In the system information area 11 is stored system information. The system information includes, for example, information on recording/playback conditions and the like. Further, the system information also includes information on respective formats of the L0 layer and the L1 layer.

Fig. 2 is a view illustrating one example of format information included in the system information.

N_LAYER indicates the number of layers provided in the optical disc. FORMAT 0 indicates a format of the L0 layer. Similarly, FORMAT 1 through FORMAT N-1 includes respective pieces of format information of the L1 layer through an L(N-1) layer.

In the optical disc 1 of the present invention, N_LAYER is 2. Further, since the L0 layer is a rewritable recording layer, FORMAT 0 is information indicating that the layer is rewritable. In addition to the information, FORMAT 0 may be information indicative of a version of written standards (book) that define formats, information on recording density, or the like information. The L1 layer is a recording layer that is not rewritable, i.e., a read-only recording layer. Therefore, FORMAT 1 is information indicating that the layer is read-only.

Since these pieces of information do not need to be rewritten, the pieces of information are recorded in the form of read-only pits or wobbles.

Respective pieces of system information stored in the L0 layer and the L1 layer are the same. On this account, even if either one of the layers becomes unreadable, system information stored in the other one of the layers can be used alternatively.

The SA is an area in which to store information instead of a storage area in case information cannot be recorded in the storage area due to damages or the like defects. In other words, the SA is an area in which to store information when an alternation process is performed.

The DMA is an area in which to store information for defective management by recording, therein, an address of a storage area where information cannot be recorded due to defects or damages and an address of an alternative area (SA). That is, the DMA is an area in which to store management information used for the alternation process. A plurality of DMAs may be provided.

Since the L0 layer is a rewritable recording layer, the L0 layer includes a storage area. If the storage area cannot be used due to defects or the like, it is necessary that the alternation process be performed. On the other hand, the L1 layer does not include a rewritable storage area. Accordingly, there is no need to perform the alternation process. Therefore, the L1 layer does not require a DMA and an SA. That is, no DMA and no SA are provided in the L1 layer.

In the access control information area 12 of the L0 layer, AC (Access Control) 0, which is access control information (control information) of the L0 layer, is stored. Further, in the access control information area 13 of the L1 layer, AC1, which is access control information of the L1 layer, is stored. The access control information is information for controlling access to a corresponding layer. A control of access specifically indicates a control of permission and prohibition of recording and reproducing information in/from a corresponding part in a corresponding layer. That is, the access control information is information that sets a plurality of areas in a recording layer and defines respective operations that an optical disc recording/ playback apparatus is allowed to perform with respect to the respective areas.

As a case in which the access control is useful, there may be, for example, a case where an operation of an optical disc recording/ playback apparatus (hereinafter, referred to as an old-model apparatus) that used to be sold is controlled with respect to standards of a new version. In this case, it is considered that the old-model apparatus does not meet the standards of the new version. However, even in such a case, it is not necessarily required that recording and reproduction of information be prohibited with respect to all areas in the optical disc. In this case, it is effective to use information that defines to which area the old-model apparatus is prohibited or allowed to perform recording and reproduction, thereby controlling an operation per area.

In this case, only the format information of each layer and its version information, as illustrated in Fig. 2, are not sufficient as the access control information, and therefore, more detailed access control information is required. Further, for such an optical disc including a plurality of recording layers having different formats, update timings of the versions of these formats are different. Therefore, respective recording layers require respective pieces of access control information.

Fig. 3 is a view illustrating one example of access control information stored in the AC0.

AC_ID is an identifier necessary for the optical disc recording/ playback apparatus to identify access control information. In the present embodiment, a string "RE" is used as the AC_ID. The L0 layer is a rewritable layer, and therefore, "RE" is an identifier conforming to the rewritable layer.

U_ACTION defines action that an optical disc recording/ playback apparatus may take in a case where the optical disc recording/ playback apparatus cannot identify the AC_ID. That is, the optical disc recording/playback apparatus that cannot identify what action it should take in the case where the AC_ID is "RE" performs a recording/ reading operation in accordance with the action defined by the U_ACTION.

ACTION defines action that an optical disc recording/ playback apparatus may take in a case where the optical disc recording/ playback apparatus can identify the AC_ID. That is, the optical disc recording/playback apparatus that can identify what action it should take in the case where the AC_ID is "RE" performs a recording/ reading operation in accordance with the action defined by the ACTION.

Fig. 4 is a view illustrating one example of a content defined by the U_ACTION.

In this example, the L0 layer is divided into 4 areas from ZONE 1 to ZONE 4. Fig. 4 shows whether or not a recording/ reading operation is allowed for the optical disc recording/playback apparatus with respect to each of the 4 areas. In this figure, "1" indicates permission and "0" indicates prohibition. In the example shown in Fig. 4, recording and reading are allowed in ZONE 1. In ZONE 2, only reading is allowed. Meanwhile, in ZONE 3 and ZONE 4, both recording and reading are prohibited.

Fig. 5 is a view illustrating one example of a content defined by the ACTION.

Similarly to the U_ACTION, the L0 layer is divided into 4 areas. Fig. 4 shows whether or not a recording/reading operation is allowed to the optical disc recording/ playback apparatus with respect to each of the 4 areas. In the example shown in Fig. 5, "1" is stored in each of the areas from ZONE 1 to ZONE 4. That is, both recording and reading are allowed in all the areas.

As described above, the optical disc recording/playback apparatus that can identify the AC_ID included in the access control information can perform a recoding operation and a reading operation that are defined by the ACTION. Meanwhile, the optical disc recording/ playback apparatus that cannot identify the AC_ID can perform a recording operation and a reading operation that are defined by the U_ACTION.

The AC1 stored in the access control information area of the L1 layer includes the same items as the AC0 illustrated in Fig. 3. However, since the L1 layer is a read-only layer, information itself stored in the AC1 is different from the information stored in the AC0. For example, as the AC_ID, a string "RO" is stored. The "RO" is an identifier conforming to a read-only layer. Further, U_ACTION and ACTION in the AC1 include respective pieces of appropriate information. For example, since the L1 layer is a read-only layer, in regard to a recording operation, "0" is stored in all areas from ZONE 1 to ZONE 4. That is, the recording is prohibited in all the areas. On the other hand, in regard to prohibition and permission of a reading operation, respective pieces of information conforming to the respective areas are stored.

The L0 layer includes an access control information storage area 14 in which to store access control information of a recording layer(s) other than the L0 layer. The access control information storage area 14 is provided in the vicinity of the access control area 12 in which the AC0 is stored. Information on the access controls is essential for the operation of the optical disc recording/ playback apparatus, and the optical disc recording/ playback apparatus should read both the AC0 and the AC1. On this account, if the AC1 is stored in an area close to an area in which the AC0 is stored, then it is possible to read the AC0 and the AC1 promptly.

In a case where an information amount of a piece of access control information per layer is 32 clusters, it is preferable that an area having a size of 32 clusters is secured for each layer of a different format in the access control information storage area 14. Further, it is preferable that the number of areas each having a size of 32 clusters, which areas are secured in the access control information storage area 14, be less than the number of layers having different formats, by 1. More specifically, in the present embodiment, the number of layers having different formats is 2. Therefore, an area having a size of 32 clusters is secured as the access control information storage area 14. For an optic disc including 3 layers having different formats, an area having a size of 64 clusters is secured as the access control information storage area 14. In this case, an area in which to store access control information of the third layer is provided in the vicinity of the area where the AC0 is stored and the area where the AC1 is stored. Here, 1 cluster indicates a minimum amount of information that can be recorded/reproduced.

Information on a position and a size of the access control information storage area 14 is normalized in the written standards. Therefore, the optical disc recording/ playback apparatus can consistently perform an appropriate process with respect to the access control information storage area 14. That is, other information is never recorded in the access control information storage area 14.

In a case where no area in which to store the AC1 is provided in the L0 layer, the AC1 cannot be stored in the L0 layer. In this case, it is necessary to read the AC1 stored in the L1 layer in order that the optical disc recording/ playback apparatus identifies to which area in the L1 layer it is allowed to perform reading and recording. Therefore, the optical disc recording/playback apparatus should perform what is called a jump between layers so as to cause a light spot position to move from a layer to another layer, and then perform seeking with respect to the area where the AC1 is stored. As a result, it takes times to read respective pieces of access control information of all layers.

In contrast, in the optical disc 1 in which the access control information storage area 14 in which to store the AC1 is provided in the L0 layer, it is possible to store, into the access control information storage area 14, the AC1 read out from the access control information area 13 in the L1 layer. For example, when the optical disc 1 is loaded into an optical disc recording/playback apparatus for the first time, the AC1 is read from the L1 layer and the AC1 thus read is recorded in the access control information storage area 14 of the L0 layer. After information of the AC1 has been recorded in the L0 layer, the AC1 is simply read out from the L0 layer, and it is, therefore, unnecessary to read the AC1 from the L1 layer. The optical disc recording/ playback apparatus, accordingly, does not need to perform a jump between layers and a seeking operation at the time of reading access control information of each recording layer. This yields an effect that it is possible to read access control information of each recording layer at short times. Especially, in a case where the optical disc recording/ playback apparatus is set to read the L0 layer first all the time when the optical disc is loaded into the optical disc recording/playback apparatus, the above effect becomes more significant. This is because all pieces of access control information are included in the L0 layer that is read first when the optical disc is loaded.

The present embodiment deals with the optical disc 1 that includes 2 recording layers. However, the arrangement of the present embodiment is also applicable to an optical disc including at least 3 recording layers. In this case, a plurality of access control information storage areas may be provided in the L0 layer in conformity to the number of pieces of access control information of the recording layers included in the optical disc.

The access control information storage area 14 of the optical disc 1 is in a state where no information is recorded therein, right after the optical disc 1 is manufactured.

### [Embodiment 2]

Another embodiment of the information storage medium of the present invention is described below with reference to Fig. 8 and Fig. 9. Arrangements other than arrangements that will be described in the present embodiment are the same as those explained in Embodiment 1, and therefore are not described here.

Fig. 8 is a view schematically illustrating storage areas of various pieces of information stored in recording layers, an L0 layer and an L1 layer, of an optical disc 1. The L0 layer and the L1 layer employ different formats from one another. The L0 layer is a rewritable recording layer and the L1 layer is a read-only layer.

The following describes what areas are provided in each of the layers and what information is stored in each of the areas.

The L0 layer of the optical disc 1 includes a system information area 11, a drive compatibility information area 15, a drive compatibility information storage area (control information storage area) 17, a DMA, an SA, and a RAM area. The L1 layer includes a system information area 11, a drive compatibility information area 16, and a ROM area. The optical disc 1 of the present embodiment is different from the optical disc in Embodiment 1 in that the drive compatibility information area and the drive compatibility information storage area are provided instead of the access control information area and the access control information storage area, respectively.

In the drive compatibility information area 15 of the L0 layer is stored DD0, which is drive compatibility information (control information) of the L0 layer. In the drive compatibility information area 16 of the L1 layer is stored DD1, which is drive compatibility information of the L1 layer. The drive compatibility information is information indicative of compatibility between the optical disc 1 and an optical disc recording/ playback apparatus. When the compatibility between them is not good, this generally means that recording or playback conditions of the optical disc recording/playback apparatus do not conform to those of the optical disc 1, thereby causing a lot of errors in information reproduced by the optical disc recording/ playback apparatus. However, the compatibility in the present invention indicates whether or not there may occur serious problems, such as damages to the optical disc itself, damages to information stored in the optical disc, or damages to a specific optical disc recording/ playback apparatus, when information is recorded in or reproduced from the optical disc with the use of the specific optical disc recording/ playback apparatus. In view of this, the reproducing or recording of information should not be performed with respect to the optical disc 1 by such an optical disc recording/ playback apparatus that is incompatible with the optical disc 1.

The drive compatibility information is information which is unique to each layer of a different format and which should be recorded by a manufacturer of the optical disc. On this account, the drive compatibility information is recorded in the form of read-only pits or wobbles.

Fig. 9 is a view illustrating one example of the drive compatibility information.

DD_ID is an identifier for an optical disc recording/ playback apparatus to identify the drive compatibility information. In the present embodiment, a string "DD" is used as the DD_ID.

N_LIST indicates the number of optical disc recording/playback apparatuses registered in the drive compatibility information. Each of DRIVE 1 through DRIVE N is information for identifying a corresponding optical disc recording/ playback apparatus, and therefore includes information on a manufacturer of the corresponding optical disc recording/ playback apparatus, information of a model number of the corresponding optical disc recording/ playback apparatus, and the like information. Each of ACTION 1 through ACTION N is information defining what operation should be performed by the corresponding optical disc recording/ playback apparatus registered in each of the DRIVE 1 through the DRIVE N. More specifically, each of the ACTION 1 through the ACTION N includes information on prohibition and permission of recording or reading. Further, each of the ACTION 1 through the ACTION N may include information for instructing ejection of the optical disc in case where continuous rotation of the optical disc may damage the optical disc. That is, the drive compatibility information includes identification information for identifying an optical disc recording/playback apparatus and operation information that defines, in association with the identification information, operation that a corresponding recording layer allows the optical disc recording/ playback apparatus to perform. As such, the optical disc recording/ playback apparatus is controlled to perform an appropriate operation with respect to the optical disc 1 in accordance with the drive compatibility information.

The L0 layer includes a drive compatibility information storage area 17 in which to store drive compatibility information of a recording layer(s) other than the L0 layer. The drive compatibility information storage area 17 has almost the same feature as that of the access control information storage area 14 shown in Embodiment 1 except that information stored therein is drive compatibility information.

Since the L0 layer of the optical disc 1 includes the drive compatibility information storage area 17 in which to store the DD1, it is possible to record, in the drive compatibility information storage area 17, the DD1 read from the drive compatibility information area 16 of the L1 layer. For example, when the optical disc 1 is loaded in the optical disc recording/ playback apparatus for the first time, the DD1 is read from the L1 layer and then recorded in the drive compatibility information storage area 17 of the L0 layer. After the information of the DD1 is recorded in the L0 layer, the DD1 may be read from the L0 layer and therefore it is not necessary to read the DD1 from the L1 layer. The optical disc recording/playback apparatus, accordingly, does not need to perform a jump between layers and a seeking operation at the time of reading drive compatibility information of each recording layer. As a result, it is possible to read the drive compatibility information of each recording layer at short times. Especially, if the optical disc recording/ playback apparatus is set to read the L0 layer first all the time when the optical disc is loaded into the optical disc recording/playback apparatus, the above effect becomes more significant. This is because all pieces of drive compatibility information are stored in the L0 layer that is read first when the optical disc is loaded.

[Embodiment 3] One embodiment of a recording/playback apparatus of the present invention and an information recording method of the present invention is described below with reference to Fig. 1, Fig. 6, and Fig. 7. Arrangements other than arrangements that will be explained in the present embodiment are the same as those explained in Embodiment 1, and therefore are not described here.

Fig. 6 is a block diagram schematically illustrating an arrangement of an optical disc recording/ playback apparatus (recording/ playback apparatus) 10 that performs recording/playback with respect to the optical disc 1 illustrated in Fig. 1.

As illustrated in Fig. 6, the optical disc recording/ playback apparatus 10 includes a pickup 2 (determination means, recording means), a reproduction circuit 3 (determination means), a decode circuit 4 (determination means), a recording/playback control circuit 5 (determination means, recording means), a servo circuit 6 (recording means), and a control circuit 7 (determination means, recording means).

The optical disc 1 is an optical disc including two layers: a L0 layer, which is a writable recording layer; and a L1 layer, which is a read-only layer. Information is recorded or reproduced with laser light irradiated from the pickup 2 to the optical disc 1.

The pickup 2 irradiates, with respect to the optical disc 1, laser light for recording information in the optical disc 1 and laser light for reproducing information stored in the optical disc 1. Information read by the pickup 2 is transmitted to the reproduction circuit 3.

The reproduction circuit 3 adjusts amplitude of a reproduction signal read by the pickup 2 and performs a predetermined filtering process. An output from the reproduction circuit 3 is supplied to the decode circuit 4.

The decode circuit 4 is a circuit that performs a decoding process on the output received from the reproduction circuit 3 by a predetermined method so that the output is converted into binary data having two levels, "1" and "2". As a method of the decoding process, there have been proposed various methods. Among these methods, PRML (Partial Response Maximum Likelihood) decode is preferably employed. The PRML decode is suitable for playback of an optical disc having high recording density. In the PRML decode, a decoding process is performed assuming intersymbol interference that may occur due to such high density. Therefore, even if a reproduction signal is deteriorated in quality due to the intersymbol interference, it is still possible to decode the reproduction signal by use of the PRML decode. An output from the decode circuit 4 is supplied to the control circuit 7 and also to an external section.

The control circuit 7 is a circuit that transmits a command to the servo circuit 6 and the recording/ playback control circuit 5 based on the output from the decode circuit 4. The control circuit 7 includes a CPU (Central Processing Unit), ROM in which a program is stored, RAM necessary for control processing, and the like.

The servo circuit 6 is a circuit for executing control of the pickup 2, such as focusing, tracking, seeking control, and a jump between layers, in accordance with the command from the control circuit 7.

The recording/playback control circuit 5 is a circuit for performing recording with respect to the optical disc 1 and playback of the optical disc 1, in accordance with the command from the control circuit 7.

The following schematically describes a function of the optical disc recording/playback apparatus 10. The optical disc recording/playback apparatus 10 has an arrangement suitable as a recording-playback apparatus for the optical disc 1 described in Embodiment 1. The optical disc 1 includes a plurality of recording layers among which at least one recording layer is a writable recording layer, and in each of the plurality of recording layers is stored control information defining an allowable recording/reading operation with respect to the each of the plurality of the recording layers. Further, in the optical disc recording/playback apparatus 10, the pickup 2, the reproduction circuit, the decode circuit 4, the recording/ playback control circuit 5, and the control circuit 7 are provided as means for reading and recording access control information, and they determine whether or not in the L0 layer, which is a writable recording layer of the optical disc 1, is stored the access control information of the L1 layer, which is a recording layer different from the L0 layer. Further, in a case where the access control information of the L1 layer is not stored in the L0 layer, the pickup 2, the recording/playback control circuit 5, the servo circuit 6, and the control circuit 7, which are provided in the optical disc recording/ playback apparatus 10, function to record, into the L0 layer, the access control information of the L1 layer.

Next will be described a process of reading and recording access control information, performed by the optical disc recording/ playback apparatus 10 with respect to the optical disc 1, with reference to Fig. 1, Fig. 6, and Fig. 7.

Fig. 7 is a flowchart showing a process of reading and recording access control information, performed by the optical disc recording/ playback apparatus 10 with respect to the optical disc 1, and an information recording method. The reading of the access control information is performed at the time when the optical disc 1 is loaded into the optical disc recording/playback apparatus 10.

Initially, in Step S1, seeking is performed with respect to the system information area 11 of the optical disk 1, and then the process proceeds to S2. The operation of seeking is performed such that the pickup 2 is moved in response to a command supplied from the control circuit 7 via the servo circuit 6. As described above, the same system information is stored in the L0 layer and the L1 layer of the optical disc 1. In order to read the system information at short times, it is preferable to read the system information from the L0 layer first.

In Step S2, the system information is read, and then the process proceeds to Step S3. The operation of reading is performed such that a reproduction signal read by the pickup 2 is processed in the reproduction circuit 3, and then decoded by the decode circuit 4. Further, a result of decoding is sent to the control circuit 7 so that the control circuit 7 identifies a content of the system information. Furthermore, the system information is temporarily stored in RAM (random access memory) included in the control circuit 7.

In Step S3, the control circuit 7 determines (judges) whether or not the L0 layer and the L1 layer have different formats, based on format information included in the system information thus read. In a case where the L0 layer and the L1 layer have the same format, respective pieces of access control information of the L0 layer and the L1 layer are also the same. Therefore, in such a case where it is determined that the formats of these layers are the same, the process proceeds to "END", thereby completing the process. On the other hand, in a case where it is determined that the L0 layer and the L1 layer have different formats, the process proceeds to Step S4.

In Step S4, the control circuit 7 reads information stored in the access control information storage area 14 of the L0 layer (determination step), and then the process proceeds to Step S5.

In Step S5, the control circuit 7 determines (judges) whether or not AC1 is stored in the access control information storage area 14, based on the information thus read from the access control information storage area 14 (determination step). The control circuit 7 can perform determination by figuring out whether the aforementioned AC_ID, U_ACTION, ACTION, and the like information included in the access control information are stored or not. In a case where it is determined that the AC1 is stored in the access control information storage area, the process proceeds to "END", thereby completing the reading process. From then onward, the control circuit 7 can perform access control with respect to the L1 layer with the use of the AC1 thus read. On the other hand, in a case where it is determined that the AC1 is not recorded in the access control information storage area 14, the process proceeds to Step S6.

In Step S6, a light spot is caused to jump from the L0 layer to the L1 layer, thereby performing seeking with respect to the access control information area 13 in which the AC1 is stored (recording step). Subsequently, the process proceeds to Step S7.

In Step S7, the AC1 of the L1 layer is read from the access control information area 13 of the L1 layer (recording step), and the process proceeds to Step S8.

In Step S8, the light spot is caused to jump from the L1 layer to the L0 layer so that seeking is performed with respect to the access control information storage area 14 of the L0 layer (recording step), and then the process proceeds to Step S9.

In Step 9, the AC1 thus read in Step S7 is recorded in the access control information storage area 14 of the L0 layer (recording step), and hereby the process proceeds to "END". The recording of the AC1 is performed such that in response to a command from the control circuit 7, the recording/ playback control circuit 5 supplies a predetermined recording signal to the pickup 2. More specifically, the control circuit 7 provides pieces of information in the AC1 that are to be recorded, to the recording/playback control circuit 5. Then, the recording/ playback control circuit 5 converts these pieces of information into pulse strings. In accordance with these pulse strings, the pickup 2 emits a laser included therein.

Note that AC0 that is access control information of the L0 layer is read after the system information has been read in Step S2.

As such, in the process described above, in a case where the AC1 is not stored in the access control information storage area 14 of the L0 layer, the AC1 is read from the access control information area 13 of the L1 layer, and then recorded in the access control information storage area 14 of the L0 layer. With the process, it is possible to produce an optical disc in which access control information of the L1 layer is stored in the L0 layer. From then onwards, when the optical disc 1 is used, the access control information of the L1 layer can be read out without t performing a jump to the L1 layer from the L0 layer, and further, it is possible to perform appropriate access control with respect to the L1 layer, accordingly.

The L0 layer is a rewritable recording layer. Therefore, in some cases, initialization of information recorded in the L0 layer, that is, reformatting may be performed after the L0 layer is once used. In such a case, it is preferable not to delete and change the AC1 recorded in the L0 layer. If the AC1 recorded in the L0 layer is deleted or changed at the reformatting, it is necessary to perform again the process of reading the AC1 from the L1 layer and then recording it in the L0 layer. However, if the AC1 is not deleted and changed at the reformatting, such a process can be omitted.

The present embodiment dealt with the recording method that is performed with respect to the optical disc 1 having two recording layers. However, the recording method can be applied to an optical disc having at least 3 recording layers. In this case, access control information of each layer may be recorded in a corresponding access control information storage area in the L0 layer. Accordingly, it is possible to produce an optical disc in which the access control information of the each layer is recorded in the L0 layer.

The present invention is not limited to the description of the embodiments above, but may be altered by a skilled person within the scope of the claims. An embodiment based on a proper combination of technical means disclosed in different embodiments is encompassed in the technical scope of the present invention.

(Additional Matters) It can be also described that the information storage medium of the present invention has the following features. That is, the information storage medium of the present invention is an information storage medium including a plurality of recording layers having different formats, in each of which plurality of recording layers a corresponding piece of control information is stored, and one recording layer selected from among the plurality of recording layers includes respective areas in which to store respective pieces of control information of the other recording layers.

As described above, an information storage medium of the present invention includes a plurality of recording layers in each of which plurality of recording layers is stored its corresponding piece of control information that defines an operation that a recording/playback apparatus is allowed to perform with respect to the each of the plurality of recording layers. In the information storage medium of the present invention, a first recording layer, which is a writable recording layer, includes a control information storage area in which to store control information that is stored in a second recording layer of a format different from that of the first recording layer.

Further, a recording/ playback apparatus of the present invention is a recording/playback apparatus for an information storage medium including a plurality of recording layers. The recording/playback apparatus of the present invention includes: determination means for determining whether or not in a first recording layer that is a writable recording layer is recorded a piece of control information of a second recording layer of a format different from that of the first recording layer; and recording means for recording, in the first recording layer, the piece of control information of the second recording layer, in a case where the piece of control information of the second recording layer is not recorded in the first recording layer.

Further, an information recording method of the present invention is an information recording method for recording respective pieces of control information of an information storage medium including a plurality of recording layers. The information recording method of the present invention includes the steps of: determining whether or not in a first recording layer that is a writable recording layer is recorded a piece of control information of a second recording layer of a format different from that of the first recording layer; and recording, in the first recording layer, the piece of control information of the second recording layer, in a case where the piece of control information of the second recording layer is not recorded in the first recording layer.

With the arrangement and the method, the piece of control information of the second recording layer that is different from the first recording layer can be recorded in the writable first recording layer. This makes it possible to read the piece of control information of the second recording layer by just reading out information recorded in the first recording layer, thereby reducing time necessary for reading respective pieces of information of a plurality of layers.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention relates to an information storage medium in which to store various pieces of information of an optical disc, a magnetic disc, and the like. The present invention can be applied to a disc including a plurality of layers having different formats.

## Claims

1. An information storage medium including a plurality of recording layers, **characterized in that**:
in each of the plurality of recording layers, a corresponding piece of control information that defines an operation that a recording/ playback apparatus is allowed to perform with respect to the each of the plurality of recording layers is stored, and
a first recording layer among the plurality of recording layers is writable and includes a control information storage area in which to store a piece of control information that is stored in a second recording layer of a format different from that of the first recording layer.

2. The information storage medium as set forth in claim 1, wherein:
the piece of control information that is stored in the second recording layer is information that sets a plurality of areas in the second recording layer and defines respective operations that the recording/playback apparatus is allowed to perform with respect to the plurality of areas.

3. The information storage medium as set forth in claim 1, wherein:
the piece of control information that is stored in the second recording layer includes identification information that identifies a recording/ playback apparatus, and operation information that defines, in association with the identification information, an operation that the recording/ playback apparatus is allowed to perform.

4. A recording/ playback apparatus for an information storage medium that includes a plurality of recording layers (a) in each of which plurality of recording layers a corresponding piece of control information that defines an operation that the recording/playback apparatus is allowed to operate with respect to the each of the plurality of recording layers is stored, and (b) among which plurality of recording layers, a first recording layer is writable and includes a control information storage area in which to store a piece of control information that is stored in a second recording layer of a format different from that of the first recording layer,
said recording/ playback apparatus **characterized by** comprising:
determination means for determining whether or not the piece of control information of the second recording layer is stored in the control information storage area; and
recording means for recording, in the control information storage area, the piece of control information of the second recording layer, in a case where the piece of control information of the second recording layer is not stored in the control information storage area.

5. An information recording method for recoding a piece of control information in an information storage medium that includes a plurality of recording layers (a) in each of which plurality of recording layers a corresponding piece of control information that defines an operation that a recording/ playback apparatus is allowed to operate with respect to the each of the plurality of recording layers is stored, and (b) among which plurality of recording layers a first recording layer is writable and includes a control information storage area in which to store a piece of control information that is stored in a second recording layer of a format different from that of the first recording layer,
said method **characterized by** comprising the steps of:
(i) determining whether or not the piece of control information of the second recording layer is stored in the control information storage area; and
(ii) recording, in the control information storage area, the piece of control information of the second recording layer, in a case where it is determined in the step (i) that the piece of control information of the second recording layer is not stored in the control information storage area.
